(19) Europäisches Patentamt / European Patent Office / Office européen des brevets

(11) **EP 3 923 094 A1**

(12) **EUROPEAN PATENT APPLICATION**

(43) Date of publication:
**15.12.2021 Bulletin 2021/50**

(51) Int Cl.:
**G05B 19/18** (2006.01)    **G05B 19/418** (2006.01)

(21) Application number: **20179003.7**

(22) Date of filing: **09.06.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Rothering, Marcel
90449 Nürnberg (DE)**
• **Seutter, Tobias
90403 Nürnberg (DE)**

(54) **INSPECTION RATE ADAPTATION**

(57)     A method of operating a production (1) for producing a plurality of products (2), the method comprising: inspecting the products (2) according to a first inspection rate (R1), the inspection rate determining the number of products that are inspected during a period of time (n-1, n, n+1) and/or from a given set of products (2), wherein an inspection of one of the products (2) comprises testing, e.g. in a first number of testing steps, at at least one inspection station (3), obtaining test data (4) based on the inspection of at least one of the products (2), setting a threshold (O1, O2) for a number of products (2) not fulfilling the testing (during a specified period of time), determining a second inspection rate (R2) based on the threshold set (O1, O2) and the test data (4) obtained, and inspecting the products (2) according to a second inspection rate (R2), wherein preferably the second inspection rate (R1) is lower than the first inspection rate (R2).

FIG 5

**Description**

TEHNICAL FIELD

Monitoring and/or testing arrangements for controlling production.

BACKGROUND

Collecting production data or the associated data collection process is a very integral part of the production management, production planning and inventory management process. It is important that it is done correctly in order to obtain a true picture of the process. In addition, it should be done in an efficient and faithful manner in order for it to be analyzed by production engineers and management to understand what is happening in the production plant with respect to process quality, efficiency and OEE (Overall Equipment Effectiveness) of machinery. Data collection from a production process can be done either through manual processes and paperwork or through a production/process management software system. The collection method chosen will obviously depend on the size and complexity of the production process being managed as some software packages can be costly to purchase and implement with requirements for different sensors, PLCs, relays, computers and control loop systems.

From US patent US628146B1 a device and method for predictively diagnosing the prevailing quality of the technical work result of a technical installation, in particular, the prevailing quality of the welding spots of a spot-welding robot has become known.

In practice, it can be extremely difficult to determine the prevailing quality of the product of a technical installation, in particular, a production system. In contrast to determining physical quantities using measuring techniques, in many cases there are no common direct measuring methods available for determining the quality parameters of production results. In some cases, there is success in assembling a highly specialized, complex measuring arrangement which, for instance, is based on radiological, electromagnetic or optical principles or a combination thereof. Many times, however, it is still necessary for the prevailing quality parameters to be subjectively determined by experienced operating personnel, for example, within the framework of a "quality control." This produces a multitude of disadvantages. First of all, the determination of quality parameters by experienced operating personnel is neither representative nor reproducible. Rather, assessments of this kind vary even in the short term, depending on the operating personnel employed and their respective daily condition. Furthermore, operating personnel can generally only carry out evaluations of quality parameters on selected production results of the respective installation by taking random samples. A temporary absence or a change of "experienced operating personnel", for example, make it impossible to prevent unreproducible assessment variations in the long term, as well.

Secondly, exceptional outlay is required to be able to use the quality parameters, gained from the assessments by the operating personnel, along the lines of open-loop or closed-loop control engineering in the form of control variables or adjusted setpoint values for influencing the operational performance of the respective technical installation. Particularly in the case of high-speed, possibly fully automatic production plants, it is almost impossible in practice for the characteristic quality values, gained from random samples, to be made usable sufficiently quickly to influence the operational equipment of the technical installation.

From United States Patent Application Publication US 2018/0307203 A1 a machining defect factor estimation device that includes a machine learning device that learns an occurrence factor of a machined-surface defect based on an inspection result on a machined surface of a workpiece has become known. The machine learning device observes the inspection result on the machined surface of the workpiece from an inspection device, as a state variable, acquires label data indicating the occurrence factor of the machined-surface defect, and learns the state variable and the label data in a manner such that they are correlated to each other.

However, an artificial neural network is a black box and its decision mechanisms not comprehendible to a human. In addition, training of the artificial neural network is required which in turn requires ample amount of data is available.

SUMMARY

Different aspects are disclosed herein that reduce the technical effort when it comes to inspecting products and that allow easy scaling of the inspection effort and are easily transferable between production systems producing different products.

According to a first aspect a method of operating a production for producing a plurality of products is proposed. The method comprising inspecting the products according to a first inspection rate, the inspection rate determining the number of products that are inspected during a period of time and/or from a given set of products. The inspection of one of the products comprises testing, e.g. in a first number of testing steps, at at least one inspection station. The method further comprising obtaining test data based on the inspection of at least one of the products and setting a threshold for a number of products not fulfilling the testing (during a specified period of time). The method further comprising determining a second inspection rate based on the threshold set and the test data obtained, and inspecting the products according to a second inspection rate, wherein preferably the second inspection rate is lower than the first inspection rate.

Products are usually inspected on site at the place of production. Furthermore, products usually are inspected at one or more stages of production, e.g. between production steps, for example, between two successive production steps, or at the end of the line, EoL. Being a key element of quality control, product inspections allow to verify product quality at different stages of the production process and prior to its dispatch. Inspecting a product before it leaves the production is an effective way of preventing quality problems and supply chain disruptions further down the line.

An inspection may comprise test criteria such as product function, performance, overall appearance and dimensions. Whether a product meets the test criteria may be determined in one or more testing steps. As a result of said testing steps or of the inspection of a product, in general, test data may be obtained. Accordingly, a threshold for a number of products may be set. The threshold may correspond to the number of products fulfilling or not fulfilling, i.e. passing or failing, an inspection. In any case, the threshold set allows identifying a (maximum) number of products not fulfilling testing. Now, the period of time for which the inspection according to the first inspection rate is carried out may correspond to one or more production cycles or to the period of time it takes to produce a predetermined number of products.

Inspection according to the second inspection rate may be carried out for a subsequent period of time subsequent to the period of time the inspection has been carried out according to the first inspection rate. This subsequent period of time may be as long as the first period of time. Alternatively, the subsequent period of time may, e.g. depending on the specific circumstances of production, be shorter or longer than the preceding period of time during which inspection according to the first inspection rate has been carried out.

The second inspection rate may be determined based on the threshold set and/or the test data obtained. For example, the test data may serve for determining a probability distribution of the test variables. The one or more test variables may thus represent the one or more test criteria. Based (solely) on the probability distribution the second inspection rate may be determined. For example, the first inspection rate may be lowered, e.g. by 10 %, in order to yield a second inspection rate in case the probability distribution predicts less products not fulfilling the one or more test criteria. In general, the second inspection rate may be adapted based on (a property of) the probability distribution or a change of (a property of) the probability distribution. Additionally or alternatively, the inspection rate may be adapted (solely) based on the threshold set. For example, if the threshold is lowered (i.e. fewer products not fulfilling the inspection) the number of inspections per time or set of products, i.e. the inspection rate, may be increased resulting in a second inspection rate.

According to a second aspect an apparatus is proposed. The apparatus is operative to perform the steps of the first aspect. Preferably the apparatus comprises a processor and a memory, that perform the steps of the method according to the first aspect.

According to a third aspect, production system comprising one or more apparatuses according to the second aspect is proposed.

According to a fourth aspect, computer program product and/or non-transitory medium comprising program code that when executed performs the method steps according to the first aspect is proposed.

BRIEF DESCRIPTION OF THE DRAWINGS

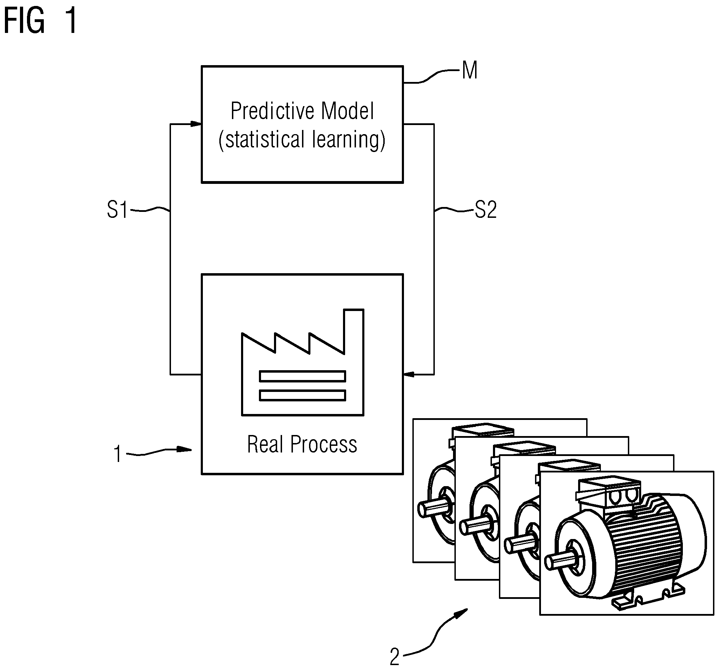

Figure 1: a schematic illustration of a production comprising closed-loop analytics,
Figure 2: A probability distribution of a test variable,
Figure 3: Risk parameters k, $\alpha$ and possible savings,
Figure 4: Test effort during different time intervals,
Figure 5: An exemplary production system.

DETAILED DESCRIPTION

In the manufacturing industry (e.g. electronics or motor production), the production 1 consists of a variety of individual production steps. During the production 1, quality-assurance measures are needed to ensure that the product 2 meets the requirements and can be used error-free. The quality with which products 2 as well as individual components and component groups are tested has already been exhausted to a "maximum". Siemens' own production achieves today already up to 99 % FPY (first pass yield) rates. This means that 99 % of the products 2 are error-free. Hence, it should be understood that by product a component or part of the final product may be understood. These quality assurance measures are costly and time-consuming, as they require, among other things, usage of personnel as well as test and testing procedures, which may also need to be (further-)developed. A saving of these non-value-enhancing work steps opens up enormous financial potential. For this reason, solutions have already been developed that include such quality assurance measures in terms of complexity and time required and, in the end, also lead to a significant increase in efficiency in the production 1. An extremely promising approach is the so-called "Closed Loop Analytics" (CLA) offered by Siemens. Therein, an analysis based on machine learning algorithms is provided in order to make reliable statements about the quality of the component, without requiring a physical testing.

The main starting point is a data set, e.g. process parameters during production such as temperature, pressure, etc., as well as target values assigned to input data, such as the delay of a part in one or more production stations, that allows a statement about the quality of the component. The data set may be obtained from the production 1 in a step S1. On the basis of this data set, it is possible to create predictive models M that allow to make predictions about the product quality purely based on the input data whereby, for example, algorithms and methods from the field of machine learning are employed. The result of the predictive model may be transmitted to the production 1 in a step S2. However, it is precisely this data set that often presents the following challenges:

Insufficient amount of data: Often, no or insufficient process data is available which allows to generate a meaningful predictive model M. This can be for example, because not enough process data is recorded. Without sufficient data, however, it is almost impossible to achieve a reliable predictive model M.

Quality of data: In order to create a meaningful predictive model M, it is not only mandatory to have a sufficient amount of data, but also the data must be of high quality. A so-called "noise" in the data set, i.e. the correlation between the input data (e.g. temperature, pressure) and the output data (e.g. distortion of a metal sheet a particular manufacturing station) is not always unambiguous, and can also give rise to a qualitatively poor model. In addition, in particular for manufacturing processes, which already offer a very high-quality standard, problems with the predictive model may arise. A predictive model must also detect "outliers" or production deviations that lead to quality problems. However, these are usually an exception in the data set and may be insufficiently captured by the predictive model. Especially when reusable prediction models M are developed for customers with the same or similar production processes, this can be become a problem, since different users can use different parameter settings.

Non-measurable sizes: Not all process parameters that have a significant impact on component quality are measurable. This can, for example, be the mechanical voltage in a deep drawing component during the pressing process in the tool or the temperature in the center of a casted component. In both cases, a measurement would be almost impossible or at least very difficult, but the quality of a component could be predicted very well if the parameters were known.

Duration of the training phase: Especially if hardly any data is available for a production 1 or the production 1 is being rebuilt, it can take a long time (up to several months) to gather a data set that allows the creation of a reliable predictive model M. In addition, an already productive system may be adapted, which in turn requires gathering a new data set.

In order to overcome these drawbacks one or more following approaches may be used: Data-based quality control, Direct measurement (e.g., End-of-Line testing as the last step in production), Process simulation.

Data-based quality control: As described in the above, it is possible to carry out a so-called data-based quality check based on process and manufacturing data and a predictive model M. The predictive model M may comprise different methods, which are usually used for so-called machine learning (e.g. decision trees, time series models, neural networks).

Process simulation: Today, there are many different ways to simulate manufacturing processes and material influences digitally. Such process simulation is available in many production areas, such as forming, and are intensively used in process development. There are so-called continuous process simulations (= physical/chemical processes) and discrete process simulations (e.g. material flow simulation), whereby for the purpose of the quality assessment of components and assemblies only continuous simulations can be used. These simulation technologies are already so advanced that certain processes are simulated with very high accuracy (partly below 5 % deviation). This makes it possible to develop and optimize processes on the computer and examine all relevant aspects that may have an impact. An example thereof is described in international patent application PCT/EP2019/079624 and respectively European patent publication EP3667445 with title "METHOD AND DEVICE AND METHOD FOR PRODUCING A PRODUCT AND COMPUTER PROGRAM PRODUCT" [sic].

Direct quality control: Special machines and equipment, which allow a quality check, may be used at at least one inspection station. For example, soldering points can be controlled by X-ray or, after a deep drawing process, a distortion measurement takes place via image recordings or laser measurement. Such inspection stations exist in many different forms with the frequent disadvantage that they are very expensive and often slow down production or form a bottleneck in the production.

A production system, e.g. a production line, and a method for operating the same is proposed that allows increasing the efficiency of the quality control of products by using a predictive model P based on test data, comprising one or more of the following steps:

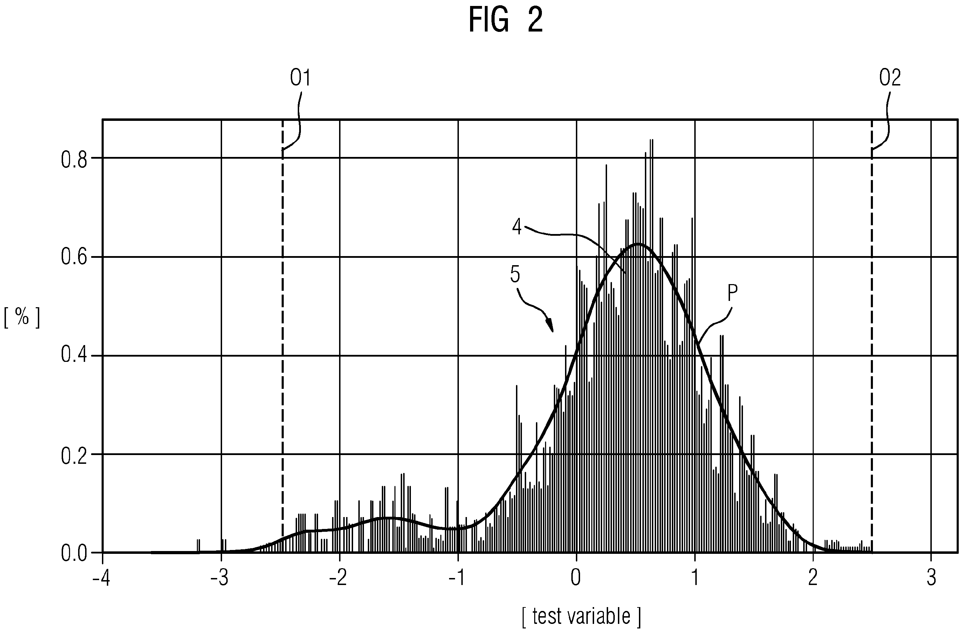

1. First, a probability (distribution) P for a defective product, e.g. for an upcoming time interval, is determined based on the probability (distribution) P of a test variable 5, e.g. in an elapsed time interval, cf. Figure 2. Test data is obtained as a result of testing T. The values one or more test variables 5 are obtained, e.g., in a step K1, as a result of the one or more testing steps performed during testing T, e.g. testing according to a first inspection rate. It should be understood that whether a product 2 is defective is determined based on whether the part or product fulfills one or more testing steps during testing T. For example, a threshold or one or more tolerances for the value(s) of one or more test variables 5 may be set based on which it is determined whether the product 2 fulfilled the testing T or not. Different methods may be used for determining the probability (distributions) of a defective product. For example in case the test variable is known to be continuous, e.g., the measurement of a continuous test variable such as temperature is performed, a kernel density estimation, KDE, may be used to fit the data and to determine the probability distribution. This probability distribution function may then be used to determine, e.g. calculate, an area outside of the tolerances O1, O2, i.e. one or more thresholds set. The area outside to the tolerances O1, O2 may correspond to probability of a part or product not fulfilling the testing T. In order to achieve the best possible estimate for the probability distribution P this procedure may be performed several times based on different bootstrap samples. The results of the probability distributions P may then be aggregated. In case the test variable is discrete a Bayesian approach, as described in more detail below, may be used.

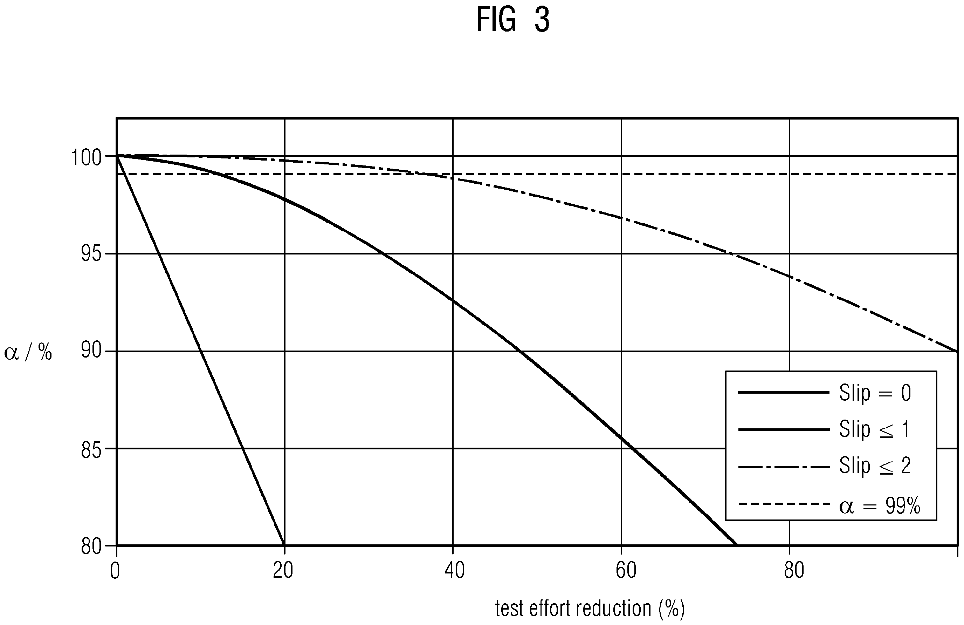

2. Second, based on the probability distribution P the savings potential of tests (and the tests' cost), i.e. a possible reduction of test, for the upcoming time interval using the binomial distribution may be determined. This calculation may be made taking into account two, for example customer-individual, risk parameters: i) a maximum accepted slip k, i.e. the number of defective products which are delivered untested, ii) a confidence level $\alpha$ (e.g. 99 %), which describes the probability that no more than k slips occur. Different combinations create different savings potentials. High values for $\alpha$ and low values for k result in low savings potential but reduce the probability of slips. This trade-off (slips k vs. test reduction) can be set individually per test variable. In Figure 3, this trade-off is visualized. The test (effort) reduction in percentage results from the normalization of the absolute number of products to the time interval used for the prediction. If the customer already has order data for the upcoming time interval, the data from that upcoming time interval may be used.

3. Third, the calculated savings potential for the upcoming time interval may be returned to production and/or test systems. That is to say, the inspection the products may be continued with an adjusted inspection rate.

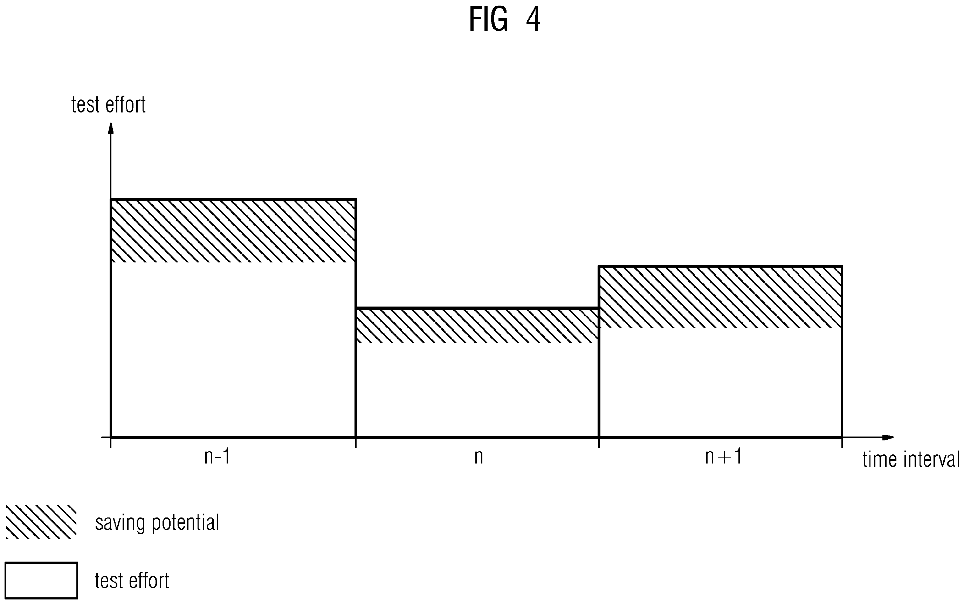

4. Fourth, in the upcoming time interval, various metrics, such as the probability of failing the testing, the number of outliers and error may be monitored, as shown in Figure 4, and the test effort may be dynamically adjusted, preferably dependent on the time interval n-1, n, n+1 to ensure the previously defined risks are met.

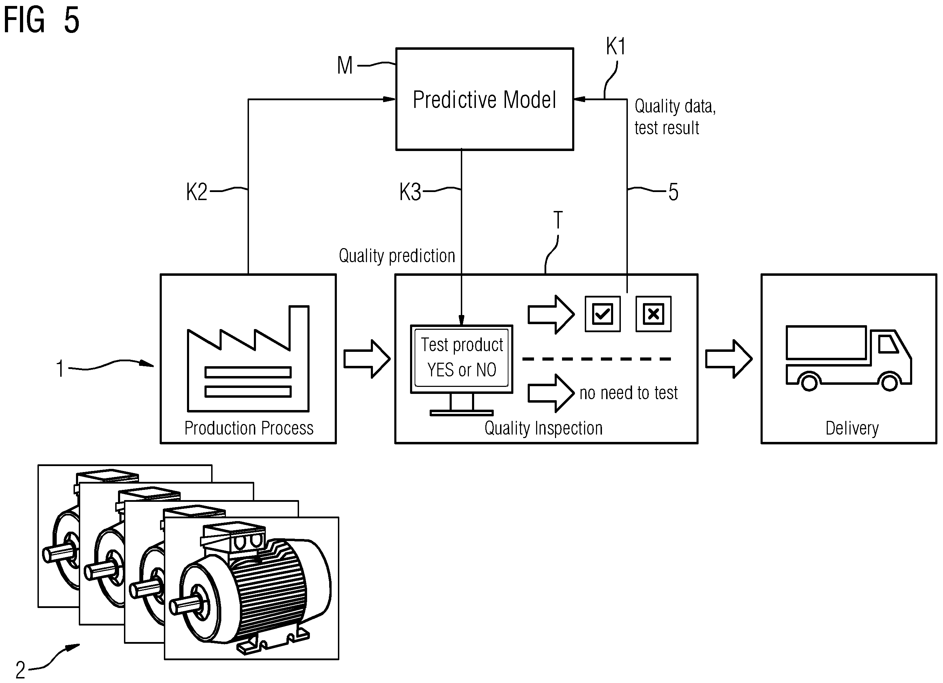

Turning to Figure 5, the production system may comprise a real production process, which shall be monitored regarding the quality of products produced. For this purpose, there data acquisition (e.g. by sensors) of quality-relevant data is foreseen in the production, e.g., forces, pressures, temperatures, etc. may be measured. In addition, test data, such as upper and lower limits and/or measured values of one or more test variables, may be gathered which are recorded during an inspection at at least one testing station. In order to prevent every component from being examined manually, a predictive model may monitor the production (process) and may, based on the quality-relevant data and/or the test data, in additionally historical quality-relevant and/or test data for the component, predict the component's quality. For this purpose, the quality-relevant process data as well as the test data may be (continuously) transferred to the predictive model M, in steps K1 and/or K2, respectively, which in turn may provide a corresponding quality forecast, in step K3.

Inspection of the products 2 may take place at the end of the line. The relevant properties and features of the device under test may be selected for the end-of-line test to determine overall quality, perform fast measurements and produce meaningful data and arrive at a correct Pass/Fail decision. Of course, testing in production 1, e.g. between two production steps in a multi-step production, may be performed alternatively or additionally. For example, in case of motor production, the test variables may be any one or more of the following: a current ripple factor, periodically fluctuating strain (rotational ripple), adjustment angle (of rotation with respect to the shaft), Line-to-line output voltages and/or corresponding electrical resistances, electromotive force (EMF) and optionally higher harmonics of the electromotive force, braking voltage (e.g., as applied to the motor windings), temperature measurements (e.g., for validating the measurements of the thermometers integrated into the motor). Additional test variables may be used in the case of testing motors of a motor production. Furthermore, for productions suitable test variables may be used when testing different products, such as printed circuit boards.

In order for a predictive model M to be created and also to have a sufficient forecast quality, a sufficient data set, both qualitatively and quantitatively, is required. Up till now, production 1 had to run for a long time (in some times several months) or a sufficient data set was already generated in the past, which is more of an exception. With the approach disclosed herein, other data sources that complement or replace the real process data are provided.

In this section, the one or more steps as described in the above will be described in more detail. First, calculation of the probability distribution of error per test variable described. Then predicting possible test effort reduction and finally monitoring measures will be discussed.

1. Calculation of the probability of error

The probability (distribution) of an error, i.e. a part or product not passing or fulfilling the testing (requirements), describes how likely it is that the measured test variables of a testing step are outside a threshold set, e.g. one or more tolerances. Hence, the probability distribution P may be part of said predictive model M. For this purpose, the historical data of the one or more testing steps in the previous time interval may be used. The size of the time intervals can be individually adapted, e.g. to certain production cycles. A time interval may correspond to a fraction of a second up to one or more months. The measured test variables from the previous time interval represent a univariate distribution, which may be approximated, e.g., using Kernel Density Estimation, KDE. In order to provide the best possible estimator for the probability of error, several exponentially and time-wise weighted bootstrap samples are created and aggregated into an error probability (distribution), which also may include a confidence interval. For the purpose of boot strapping, the exponential weighting allows putting more emphasis on more recent measurements (of the one or more test variables) at the end of the previous time interval, and less emphasis on the measurements at the beginning of the previous time interval. The aggregated KDEs can then be used together with the upper and lower tolerance limits to calculate the probability of error.

2. Calculation of test reduction

With the probability of error calculated, as described in the above, for the previous time interval, a number of reduced test may be determined. To this end, a binomial distribution is used. The parameters k (number of maximum slips in the upcoming time interval) and $\alpha$ (probability of no more than k slips in the next time interval) can be set, e.g., individually by a user. After these parameters have been fixed, the binomial distribution can be solved for n (number of reduced tests). Subsequently, in order to indicate a test reduction in percent, the number n is set in relation to the number of tests in the previous time interval or, if known, set in relation to the subsequent time interval. In order to be able to repeat step 1. reliably again in the time interval after the subsequent time interval, a sufficient number of tests needs to be performed during the subsequent time interval, i.e. the one for which the number of tests has already been reduced. In order to achieve this the minimum number of test, the test (effort) reduction may be set to R-max (e.g., 2/3). In addition to this, at least n_min tests, need to be performed in a particular time interval. Hence, as another boundary condition the number of tests n min may be set.

Steps 1. and 2. as just described may be repeated after each time interval. Of course, it is possible to repeat steps 1. and 2. periodically not after each time interval but after a number of time intervals have passed in order to reduce the test efforts. Hence, after having determined the possible test reduction and/or the corresponding inspection second rate this second inspection rate may be applied to the testing station. That is to say the second inspection rate is used for testing the products.

3. Monitoring

To monitor test reduction, multiple metrics may be calculated and/or displayed or otherwise be brought to the attention of a user, e.g., an alarm may be raised, during or after a time interval. The most important parameter for monitoring is the derived probability of error. This probability of error may be recalculated (several times) within the time interval, e.g., in sub-intervals, in order to check whether the predicted test reduction still is valid. If the error probabilities significantly deviate from the one predicted for the time interval, a new test reduction, is calculated, i.e. another inspection rate is determined. In addition, one or more of the following metrics may be determined: Number of real errors, Number of outliers defined by the Inter Quartile Range of the distribution from the previous time interval, similarity of the distributions of the current and previous time interval by means of the Kolmogorov-Smirnov and/or Anderson-Darling Tests, further moments of the distributions in the current time interval (such as mean, standard deviation, and/or Kurtosis, etc.), process capability index values. If there are too many deviations between the previous and the present time intervals, an alarm may be raised, and the test reduction, i.e. the inspection rate, accordingly adjusted.

Hence, appropriate data to estimate the failure rate/probability p of a product, for example a panel, is needed. Furthermore, a time interval or a number of products based on which the test reduction is performed is required. Finally, a certainty for having not more than the number of slips k allowed in that time interval is required, e.g., a 99 % certainty not to have more than 1 slip. Then the number of tests that may be skipped in the next time interval (under the assumption that the failure probability for the production of the product is stable) may be determined. The failure probability P may be monitored during the time intervals in order to intervene and take preventive measures in case necessary. It should be understood that the probability for having not more than a predetermined number of slips k differs between different product groups or types and/or different time intervals.

For the estimation of the failure probability the following steps may be executed, preferably iteratively:

1. Collect test results (measurements) of a previous time interval, for example comprising x days (x is a parameter which may be set, e.g. set to 90). These test results may then form a data set.
2. Sample n times K data points (corresponding to the measurements) out of the data set, e.g. using exponential or uniform weighting, to generate bootstrap samples. This is done in order to improve the estimate of the probability (distribution) P to be determined.
3. If measurements of the test variables 5 are continuous (e.g. voltage, electrical current, etc.) a Kernel Density Estimation, KDE, may be used in order to fit the distribution and compute the area outside of specified limits. Then the estimates may be aggregated in order to determine a stable and good estimator of the failure probability P. Alternatively, a Bayesian estimator may be computed for the failure probability by regarding the data as the outcome of a Bernoulli experiment. Hence, it is possible to compute the posterior distribution by using Bayes Theorem. Both methods lead to a distribution over P (either via bootstrap or via Bayes Theorem). Finally, a certain percentile (e.g. 90 %) will be used as an estimator for the failure probability p. If a KDE and Bayes estimator is present, the larger one will be used in the next step.
4. Use the binomial distribution together with predefined certainties $\alpha$ and a maximum number of slips k to solve for n, i.e. the number of skipped tests for the next time interval (resulting in a reduced, second inspection rate).
5. These steps may be repeated after a lapsed time interval, e.g., on a daily, weekly, monthly basis.

The computed test reduction per iteration may be valid for a defined time frame, e.g. for one month. However, in order to ensure that the computed test reduction is valid the failure probability may be monitored on a shorter time interval basis, e.g. on a daily basis. If the probability estimator increases drastically the production process may be halted or the inspection rate adapted again. For example, in such a case testing may be increased again, e.g. all of the products may be subject to inspection and testing.

Now, the estimation of the probability distribution of (not) fulfilling the inspection comprising one or more testing steps is described in more detail. Two different approaches to estimate the probability of error may be used: KDE and Bayes. It should be understood that throughout the present disclosure probability of error and failure probability is used interchangeably.

If the test variables are continuous the drawn bootstrap samples may be fitted using KDE. Together with the given predetermined limits per test variables, i.e. one or more thresholds which define whether a product passes or fails inspection, a bootstrap distribution can be derived. Then the median or other percentiles of the bootstrap distribution may be chosen as the probability for failing (or passing) one or more test of an inspection.

For the Bayesian estimator the data is treated as the outcome of a Bernoulli experiment (like a simple coin-toss). The data may be weighted, e.g. either uniformly or exponentially. Afterwards, the probability distribution may be calculated based on the following formula:

$$p(\pi|D') = \frac{p(D'|\pi)p(\pi)}{p(D')}$$

where $\pi$ is the failure probability, $p(D'|\pi)$ a likelihood function for the Bernoulli experiment, i.e. the posterior probability distribution, $p(D')$ a normalization constant, $p(\pi)$ is a prior belief of the probability distribution, i.e. a prior probability distribution to the posterior probability distribution. Here a conjugate prior, i.e. the Beta distribution, is used. The parameters a and b of the Beta distribution can (initially) be manually set, e.g. a=1 and b=1 to yield a uniform distribution, or can be derived from the posterior distribution, e.g., by continuously updating the parameters of the Beta distribution. Finally, a combination of the KDE estimate and the Bayes estimate may be used. If the data is discrete the Bayesian estimate may be used. If the data is continuous KDE estimates for the prior belief of the probability distribution may be used. Alternatively, the maximum value of the probability of error, i.e. based on KDE or Bayes approach, may be used. In that case both the KDE and Bayes approach may be performed.

Alternatively, a Bayesian estimator for the probability p of error which allows for continuous adapting and hence improving the probability of error estimate. Furthermore, an innovation factor $\mu$, running between 0 and 1, which can be used to weight the previous posterior as part of the new prior: $P_{prior}(n+1) = (1- \mu) P_{posterior}(n) + \mu P_{prior}(n)$, where the prior $P_{prior}$ is actually time independent, and n designates consecutive time interval of prodcution.

Now, after having obtained, e.g., computed, as described in the above, the p estimator $\pi$ the test reduction n may be determined based on the following formula:

$$P(n, \pi, k \leq k') = \sum_{k=0}^{k'} \binom{n}{k} \pi^k (1 - \pi)^{(n-k)} \geq \alpha$$

Here, k' and $\alpha$ may be pre-defined, e.g. by a user. Alternatively, k' and $\alpha$ may be set when creating the computer code that is executed when performing the method steps as described in the above. For instance, $\alpha = 0.99$ and k' = 1 means that n tests may be skipped while being 99 % confident of not having more than k' slips (malfunctioning products which have skipped the testing). The formula given in the above may be solved numerically for n. Based on the number of test n that may be skipped the inspection rate of products may be changed, i.e. from a first inspection rate (for a first time interval) to a second inspection rate (for a subsequent time interval). There inspection rate defines the number of products 2 that are testes relative to the total number of products 2 produced.

The proposed embodiments provide low entry barriers since most customers already have a database for their test results. Compared to other Closed-Loop Analytics methods, no other data connection than the one to a database with such test results is necessary. Further advantages comprise, that no dedicated sensors are necessary and that the model is comprehensible to a human since no black box as in the case of artificial neural networks is involved. This causes greater confidence in the methods used. Furthermore, a continuous monitoring and adaptation of test reduction is enabled. The duration of the learning phase can be significantly reduced, e.g. by using a bootstrapping algorithm as proposed. Overall, higher-quality prediction models for quality forecasting with possibly very short learning time are provided herewith.

The application possibilities of predictive models, which Siemens already offers today, are expanded. The predictive models used become more reliable and it may be possible to standardize predictive models for certain processes. The scaling and/or transferability of the models used is significantly simplified as no longer machine learning algorithms such as artificial neural networks must be trained.

**Claims**

1. A method of operating a production (1) for producing a plurality of products (2), the method comprising:

   inspecting the products (2) according to a first inspection rate (R1), the inspection rate determining the number of products that are inspected during a period of time (n-1, n, n+1) and/or from a given set of products (2), wherein an inspection of one of the products (2) comprises testing, e.g. in a first number of testing steps, at at least one inspection station (3),
   obtaining test data (4) based on the inspection of at least one of the products (2),
   setting a threshold (O1, O2) for a number of products (2) not fulfilling the testing (during a specified period of time), determining a second inspection rate (R2) based on the threshold set (O1, O2) and the test data (4) obtained, and inspecting the products (2) according to a second inspection rate (R2), wherein preferably the second inspection rate (R1) is lower than the first inspection rate (R2).

2. The method according to the preceding claim:
   determining, based on the test data (4) obtained, the probability distribution (P) of one or more test variables (5) measured when testing the products (2).

3. The method according to any one of the preceding claims:

wherein determining the probability distribution (P) of one or more test variables (5) comprises the step of:
fitting the test data (4) based on a kernel density estimation.

4. The method according to any one of the preceding claims:
wherein determining the probability distribution (P) of one or more test variables (5) comprises the step of:
determining historical values of the one or more test variables (5), wherein the historical values comprise values of test variables (5) during a preceding, and preferably elapsed, time interval (n-1, n, n+1) for testing, and wherein preferably the time interval (n-1, n, n+1) is adjustable.

5. The method according to any one of the preceding claims:
wherein determining the probability distribution (P) of one or more test variables (5) comprises the step of:
sampling historical values of the one or more test variables (P) according to a statistical bootstrap model.

6. The method according to any one of the preceding claims:
wherein the sampling according to the bootstrap model comprises the step of:
weighting the historical values based on their chronological order, preferably weighting newer measurements of the historical values higher than older measurements of the one or more test variables (5), preferably of the elapsed time interval (n-1, n, n+1), and wherein most preferably weighting of the values of the test variables (5) is based on an exponential distribution.

7. The method according to any one of the preceding claims:
wherein determining the second inspection rate (R2) comprises:

setting a probability ($\alpha$) for a threshold (k) of a number of products (2) not fulfilling the testing, and
determining, preferably using the binomial distribution, the second inspection rate (R2) based on the probability ($\alpha$) set and the threshold (k) of the number of products (2) not fulfilling the testing and the probability distribution (P) determined.

8. The method according to any one of the preceding claims:
limiting the number of values of test variables (5) measured during a time interval (n-1, n, n+1) to a minimum number, e.g., to have a sufficient sample size for bootstrapping.

9. The method according to any one of the preceding claims:
repeating the steps of any one of the preceding claims regularly, e.g., periodically, and preferably for each time interval (n-1, n, n+1) in which test variables (5) have been measured.

10. The method according to any one of the preceding claims, comprising the step of:

during a time interval (n-1, n, n+1) repeatedly determining the probability distribution (P), and comparing the determined probability distributions (P), and
preferably in case the difference between the determined probability distributions exceeds a preset threshold adjusting the inspection rate (R1, R2).

11. The method according to any one of the preceding claims, comprising the step of:

adjusting the first inspection rate (R1) based on a number of products (2) not fulfilling the testing, and/or
adjusting the first inspection rate (R1) based on a number of deviations from the interquartile range of the previous time interval (n-1, n, n+1), and/or
adjusting the first inspection rate (R1) based on a similarity metric of two intervals (n-1, n, n+1), e.g., based on a Kolmogorov-Smirnov test and/or an Anderson-Darling test,
and/or
adjusting the first inspection rate (R1) based on one or more moments of the probability distribution (P), and/or
adjusting the first inspection rate (R1) based on process capability index.

12. An apparatus (10) operative to perform the steps of any one of the preceding claims.

13. The apparatus (10) comprising a processor and a memory, that perform at least part of the steps of claims 1 to 11.

**14.** A production system comprising one or more apparatuses according to claim 12 or 13.

**15.** Computer program product and/or non-transitory medium, comprising program code that when executed performs the method steps of any one of the claims 1 to 11.

FIG 1

EP 3 923 094 A1

FIG 2

EP 3 923 094 A1

FIG 3

FIG 4

FIG 5

Predictive Model — M, K1

Quality data, test result

K2    K3    5

Quality prediction

T

Production Process

Quality Inspection

Test product YES or NO

no need to test

Delivery

1

2

EP 3 923 094 A1

Europäisches
Patentamt

European
Patent Office

Office européen
des brevets

## EUROPEAN SEARCH REPORT

Application Number

EP 20 17 9003

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 477 432 B1 (CHEN SHUN-AN [TW] ET AL) 5 November 2002 (2002-11-05) * abstract * * column 1, line 9 - column 3, line 12 * * column 3, line 42 - column 7, line 5 * * claims 1-20 * * figures 1-6 * | 1-15 | INV. G05B19/18 G05B19/418 |
| A | US 2002/183949 A1 (CHEN SHUN-AN [TW] ET AL) 5 December 2002 (2002-12-05) * abstract * * paragraph [0001] - paragraph [0010] * * paragraph [0014] - paragraph [0026] * * claims 1-13 * * figures 1-2 * | 1-15 | |
| A | US 2019/033839 A1 (KUWABARA AKIYUKI [JP] ET AL) 31 January 2019 (2019-01-31) * abstract * * paragraph [0002] - paragraph [0010] * * paragraph [0018] - paragraph [0091] * * claims 1-5 * * figures 1-7 * | 1-15 | |
| A | US 2019/227520 A1 (CHEN RUOBING [US] ET AL) 25 July 2019 (2019-07-25) * abstract * * paragraph [0001] - paragraph [0005] * * paragraph [0012] - paragraph [0012] * * claims 1-6 * * figures 1-3 * | 1-15 | TECHNICAL FIELDS SEARCHED (IPC) G05B |

The present search report has been drawn up for all claims

| Place of search | Date of completion of the search | Examiner |
|---|---|---|
| Munich | 27 October 2020 | Schrembs, Gerd |

EPO FORM 1503 03.82 (P04C01)

## ANNEX TO THE EUROPEAN SEARCH REPORT
## ON EUROPEAN PATENT APPLICATION NO.

EP 20 17 9003

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2020

| Patent document cited in search report | | Publication date | Patent family member(s) | | Publication date |
|---|---|---|---|---|---|
| US 6477432 | B1 | 05-11-2002 | NONE | | |
| US 2002183949 | A1 | 05-12-2002 | TW | 499724 B | 21-08-2002 |
| | | | US | 2002183949 A1 | 05-12-2002 |
| US 2019033839 | A1 | 31-01-2019 | CN | 109308048 A | 05-02-2019 |
| | | | DE | 102018117423 A1 | 31-01-2019 |
| | | | JP | 6756676 B2 | 16-09-2020 |
| | | | JP | 2019025561 A | 21-02-2019 |
| | | | US | 2019033839 A1 | 31-01-2019 |
| US 2019227520 | A1 | 25-07-2019 | CN | 110023861 A | 16-07-2019 |
| | | | DE | 112017003743 T5 | 18-04-2019 |
| | | | US | 2019227520 A1 | 25-07-2019 |
| | | | WO | 2018039259 A1 | 01-03-2018 |

EPO FORM P0459

For more details about this annex : see Official Journal of the European Patent Office, No. 12/82

**EP 3 923 094 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 628146 B1
- US 20180307203 A1
- EP 2019079624 W
- EP 3667445 A